# EUROPÄISCHE PATENTSCHRIFT

(11) **EP 1 098 112 B1**
(45) Veröffentlichungstag und Bekanntmachung des Hinweises auf die Patenterteilung: **22.06.2005**
(21) Anmeldenummer: 00123019.2
(22) Anmeldetag: 24.10.2000
(51) Int. Cl.: F16H 59/02

(54) **Gangwahleinrichtung**
Gear selection device
Dispositif de sélection de vitesse

(30) Priorität: 03.11.1999 DE 29919274 U
(43) Veröffentlichungstag der Anmeldung: 09.05.2001
(73) Patentinhaber: SIEMENS AKTIENGESELLSCHAFT, 80333 München (DE)
(72) Erfinder: Koch, Siegfried, Dipl.-Ing. (FH), 78056 Villingen-Schwenningen (DE)

(56) Entgegenhaltungen:
- EP-A- 0 390 357
- DE-A- 19 509 472
- US-A- 4 884 057

## Beschreibung

Die Erfindung betrifft einen Gangwahlschalter zum Einstellen einer Schaltstellung bzw. eines Ganges bei einem automatischen Getriebe eines Fahrzeugs.

Gangwahlschalter sind seit langem in Form mechanischer Schalthebel bekannt. Sie sind aber auch schon z.B. von der Fa. Voith Antriebstechnik in D-89510 Heidenheim in Form einer elektromechanischen Baugruppe als Tastenschalter realisiert worden, bei der jeder Schaltstellung des automatischen Getriebes ein rastender Schalter zugeordnet ist, wobei die Zuordnung jedes Schalters zu einem bestimmten bei dem automatischen Getriebe einstellbaren Gang durch eine entsprechende Beschriftung auf oder an jedem Schalter angezeigt wird. Bei einem Getriebe mit beispielsweise sechs einstellbaren Schaltstellungen bzw. Gängen besitzt eine solche Baugruppe daher dann sechs Schalter, wodurch sich für diese Baugruppe ein beträchtliches Bauvolumen ergibt. So kann der frontseitige Platzbedarf z. B. bei etwa 120 x 20 mm liegen, wenn - wie üblich - alle sechs Schalter in einer Reihe angeordnet sind. Außerdem führt die Mechanik des Rastmechanismus sowie der erforderliche Betätigungshub bei derartigen Schaltern zu einer großen Bautiefe von z. B. über 100 mm, wobei zusätzlich schalterrückseitig noch ein kräftiger Kabelbaum für die Stromführung zu den einzelnen Schaltern zu berücksichtigen ist. Denn aus dem praktischen Einsatz bekannte elektromechanische Gangwahlschalter werden direkt am Bordnetz des Fahrzeugs betrieben, das bei Nutzfahrzeugen und Bussen zumeist 24 Volt beträgt. Außerdem sind die Tastenköpfe zur Beleuchtung der Tasten in der Regel mit Glühlampen mit einer elektrischen Leistungen von jeweils 1 Watt oder mehr ausgestattet, was überdies bei der typischen Anordnung solcher Gangwahlschalter im Armaturenbrett eines Fahrzeugs auch noch zu einem thermischen Problem führt, weil für die nötige Wärmeableitung gesorgt werden muß.

Aus der EP 0 390 357 A1, die alle Merkmale des Oberbegriffs des Anspruchs 1 offenbart, ist ein Gangwahlschalter zum Einstellen einer Schaltstellung bzw. eines Ganges bei einem automatischen Getriebe eines Fahrzeugs bekannt, bei dem zum Einstellen einer Schaltstellung bzw. eines Ganges nur ein einziges Bedienelement vorgesehen ist. Mit diesem Bedienelement kann jede im automatischen Getriebe vorhandene Schaltstellung bzw. jeder Gang eingestellt werden. Weiterhin ist diesem Bedienelement ein Display zugeordnet, auf dem die aktuell eingestellte Schaltstellung bzw. der aktuell eingestellte Gang anzeigbar ist.

Es ist nun die Aufgabe der vorliegenden Erfindung, einen Gangwahlschalter zum Einstellen einer Schaltstellung bzw. eines Ganges bei einem automatischen Getriebe eines Fahrzeugs aufzuzeigen, der unter Beibehaltung der gewohnten Einstellbarkeit der für ein automatisches Getriebe üblichen Schaltstellungen bzw. Gänge in seinem Bauraumbedarf im Armaturenbrett erheblich reduziert ist. Darüber hinaus soll auch der elektrische Leistungsbedarf des Gangwahlschalters, der für den Schaltvorgang und auch für die Beleuchtung seines Bedienelementes und der dazugehörigen Anzeigen erforderlich ist, deutlich verringert werden.

Die Aufgabe wird durch einen Gangwahlschalter mit den Merkmalen des ersten Anspruchs gelöst. Die abhängigen Ansprüche zeigen vorteilhafte Ausgestaltungen und Weiterbildungen der gefundenen Lösung.

Erfindungsgemäß wird der Gangwahlschalter zum Einstellen einer Schaltstellung bzw. eines Ganges nur mit einem einzigen Bedienelement ausgestattet, wobei diesem einen Bedienelement ein Display zugeordnet ist und mit diesem einen Bedienelement jede im automatischen Getriebe vorhandene Schaltstellung bzw. jeder Gang einstellbar ist. Auf dem Display ist numerisch, alphanumerisch oder durch eine entsp echende Symbolik die aktuell eingestellte Schaltstellung bzw. der aktuell eingestellte Gang anzeigbar. Das eine Bedienelement, das eine Hubtaste, ein Schaltmattentaster oder ein Wippenschalter ist, und das Display sind mit einer elektronischen Schaltungsanordnung verbunden, die an einen im Fahrzeug angeordneten Datenbus angeschlossen ist und die vom Bedienelement ausgelöste Steuerbefehle über den Datenbus an das Getriebe abgibt. Die Kombination dieser Merkmale ergibt einen elektronischen Gangwahlschalter, der kleinbauend ausgeführt werden kann und zusätzlich nur eine geringe eigene Leistungsaufnahme für den Schaltvorgang und eine eventuell vorzusehene Displaybeleuchtung aufweist.

Im folgenden wird die Erfindung anhand eines in der Zeichnung dargestellten Ausführungsbeispiels näher erläutert, wobei weitere Merkmale und Vorteile der Erfindung deutlich werden. Es zeigen
- Figur 1: ein Gehäuse eines erfindungsgemäßen Gangwahlschalters in perspektivischer Darstellung und
- Figur 2: Anzeigen, die bei verschiedenen Schaltstellungen bzw. Gängen des Getriebes auf dem Display erscheinen.

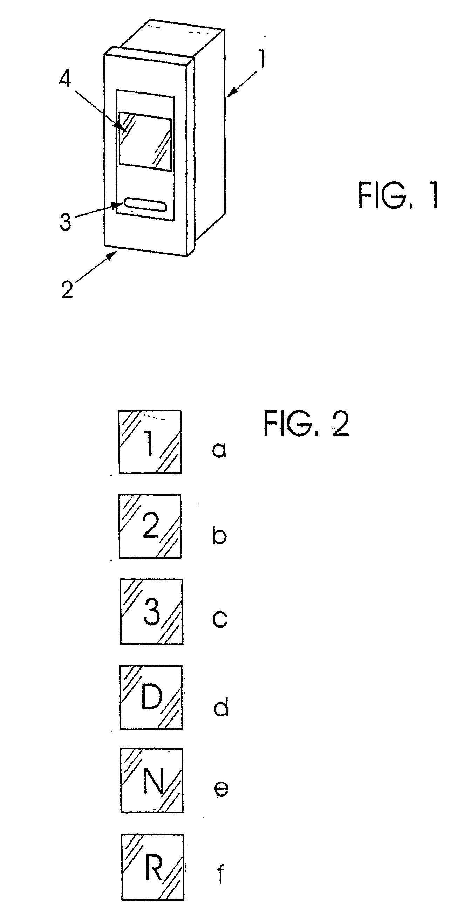

Figur 1 zeigt das Gehäuse 1 eines erfindungsgemäßen Gangwahlschalters. Das Gehäuse 1 kann in das Armaturenbrett eines Fahrzeugs eingelassen und frontseitig mit einer Blende 2 abgeschlossen werden. In der Blende 2 ist ein als Taster ausgebildetes Bedienelement 3 sowie ein diesem Bedienelement 3 zugeordnetes Display 4 angeordnet, wobei das Display 4 in LCD-Technik oder in jeder anderen geeigneten Technologie ausgeführt sein kann. Auf dem Display 4 werden entsprechend der Betätigung des Bedienelementes 3 die jeweilige Schaltstellung bzw. der gewählte Gang bei dem automatischen Getriebe des Fahrzeugs vorzugsweise in alphanumerischer Form angezeigt. Diese verschiedenen Anzeigen a b, c, d, e, f sind beispielhaft in der Figur 2 dargestellt. Sie können entsprechend der Bauart und Steuerung des automatischen Getriebes mit dem Bedienelement 3 nacheinander angewählt und eingestellt werden. Schaltungsmäßig sind das Bedienelement 3 und das Display 4 mit einer in den Figuren nicht dargestellten elektronischen Schaltungsanordnung verbunden, die an einen im Fahrzeug angeordneten Datenbus angeschlossen ist und die vom Bedienelement 3 ausgelöste Steuerbefehle über den Datenbus an das Getriebe abgibt. Konstruktiv ist das Bedienelement 3 als Hubtaste, als Schaltmattentaster oder als Wippenschalter ausgebildet. Es ist besonders vorteilhaft, das Bedienelement 3 und das Display 4 - wie in der Figur 1 dargestellt - in einer einzigen Baueinheit, d. h. in einem einzigen Gehäuse 1 anzuordnen. Ebenso ist es von Vorteil, wenn die Zuordnung zwischen der Betätigung des Bedienelementes 3 und der Wahl einer Schaltstellung bzw. der Einstellung eines Ganges bei dem automatischen Getriebe sowie die Art der Anzeige a, b, c, d, e, f der aktuell gewählten Schaltstellung bzw. des aktuell eingestellten Ganges auf dem Display 4 programmtechnisch in einem Speicher hinterlegt sind, der Bestandteil derjenigen Schaltungsanordnung ist, mit der das Bedienelement 3 und das Display 4 verbunden sind. In der Praxis wird man das Display 4 zur Verbesserung der Ablesbarkeit seiner Anzeigen a b, c, d, e, f und bedarfsweise auch das Bedienelement 3 zur Realisierung einer Suchhilfe bei dunkler Umgebung durch eine oder mehrere Leuchtdioden beleuchten und für die Lichtverteilung gegebenenfalls einen Lichtleiter vorsehen. Auch können für die Ausleuchtung des Display 4 Leuchtdioden mit verschiedenfarbiger Lichtemission vorgesehen werden, um eine einzelne Schaltstellung von den übrigen Schaltstellungen hervorzuheben. So kann z. B. die neutrale Schaltstellung in Rot ausgeleuchtet sein. In diesem Fall geht beim Erreichen einer spezifischen Schaltstellung für den Fahrer von dem Farbumschlag des Display 4 eine gut wahrnehmbare Signalwirkung aus.

Es ist ein besonderer Vorteil der vorgeschlagenen Erfindung, daß dieser Gangwahlschalter allein durch programmtechnische Maßnahmen an jedes beliebige automatische Getriebe angepaßt werden kann. Konstruktive Änderungen am Gangwahlschalter sind nicht erforderlich, ganz gleich, wie viele verschiedene Schaltstellungen bzw. Gänge das Getriebe aufweist.

## Patentansprüche

1. Gangwahlschalter zum Einstellen einer Schaltstellung bzw. eines Ganges bei einem automatischen Getriebe eines Fahrzeugs,
wobei
zum Einstellen einer Schaltstellung bzw. eines Ganges nur ein einziges Bedienelement (3) vorgesehen ist,
mit diesem einen Bedienelement (3) jede im automatischen Getriebe vorhandene Schaltstellung bzw. jeder Gang einstellbar ist,
diesem einen Bedienelement (3) ein Display (4) zugeordnet ist, und wobei
auf dem Display (4) alphanumerisch oder durch eine entsprechende Symbolik die aktuell eingestellte Schaltstellung bzw. der aktuell eingestellte Gang anzeigbar ist, **dadurch gekennzeichnet**
**daß** das eine Bedienelement (3) und das Display (4) mit einer elektronischen Schaltungsanordnung verbunden sind, die an einen im Fahrzeug angeordneten Datenbus angeschlossen ist und die vom Bedienelement (3) ausgelöste Steuerbefehle über den Datenbus an das Getriebe abgibt, und
**daß** das eine Bedienelement (3) eine Hubtaste, ein Schaltmattentaster oder ein Wippenschalter ist.

2. Gangwahlschalter nach Anspruch 1
**dadurch gekennzeichnet,**
**daß** das Display (4) in LCD-Technik ausgeführt ist.

3. Gangwahlschalter nach einem der vorangegangenen Ansprüche,
**dadurch gekennzeichnet,**
**daß** das eine Bedienelement (3) und das Display (4) zusammen in derselben Baueinheit in der Blende (2) eines einzigen Gehäuses (1) angeordnet sind.

4. Gangwahlschalter nach einem der vorangegangenen Ansprüche,
**dadurch gekennzeichnet,**
**daß** die Zuordnung zwischen der Betätigung des einen Bedienelementes (3) und der Wahl einer Schaltstellung bzw. der Einstellung eines Ganges bei dem automatischen Getriebe sowie die Art der Anzeige (a b, c, d, e, f) der aktuell gewählten Schaltstellung bzw. des aktuell eingestellten Ganges auf dem Display (4) programmtechnisch in einem Speicher hinterlegt sind, der Bestandteil derjenigen Schaltungsanordnung ist, mit der das Bedienelement (3) und das Display (4) verbunden sind.

5. Gangwahlschalter nach einem der vorangegangenen Ansprüche,
**dadurch gekennzeichnet,**
**daß** als Lichtquelle zur Beleuchtung des Displays (4) oder des Bedienelementes (3) eine oder mehrere gegebenenfalls verschiedenfarbige Leuchtdioden vorgesehen sind.

6. Gangwahlschalter nach Anspruch 5,
**dadurch gekennzeichnet,**
**daß** für die Verteilung des von der Leuchtdiode oder den Leuchtdioden erzeugten Lichts ein Lichtleiter vorgesehen ist.

## Claims

1. Selector device for setting a shift position or a gear speed in an automatic transmission of a vehicle, wherein only a single operator control element (3) is provided for setting a shift position or a gear speed, each shift position or each gear speed which is present in the automatic transmission can be set with this one operator control element (3), a display (4) is assigned to this one operator control element (3), and wherein the currently set shift position or the currently set gear speed can be displayed alphanumerically or by means of a corresponding symbol system on the display (4), **characterized in that** the one operator control element (3) and the display (4) are connected to an electronic circuit arrangement which is connected to a data bus arranged in the vehicle, and outputs the control instructions triggered by the operator control element (3) to the transmission via the data bus, and **in that** the one operator control element (3) is a lever switch, a switching mat momentary contact switch or a rocker switch.

2. Selector device according to Claim 1, **characterized in that** the display (4) is embodied using LCD technology.

3. Selector device according to one of the preceding claims, **characterized in that** the one operator control element (3) and the display (4) are arranged together in the same physical unit in the panel (2) of a single housing (1).

4. Selector device according to one of the preceding claims, **characterized in that** the assignment between the activation of the one operator control element (3) and the selection of a shift position or the setting of a gear speed in the automatic transmission and the type of display (a, b, c, d, e, f) of the currently selected shift position or of the currently set gear speed on the display (4) are stored by means of program technology in a memory which is a component of the circuit arrangement to which the operator control element (3) and the display (4) are connected.

5. Selector device according to one of the preceding claims, **characterized in that** one or more, if appropriate differently coloured, light-emitting diodes are provided as the light source for illuminating the display (4) or the operator control element (3).

6. Selector device according to Claim 5, **characterized in that** a light guide is provided for distributing the light generated by the light-emitting diode or diodes.

## Revendications

1. Sélecteur de vitesse permettant de régler une position de sélection ou une vitesse sur une boîte de vitesses automatique d'un véhicule,
où, pour régler une position de sélection ou, respectivement, une vitesse, il n'est prévu qu'un seul et unique élément de commande (3),
où, avec cet unique élément de commande (3), il est possible de régler, dans la boîte de vitesses automatique, n'importe quelle position de sélection ou, respectivement, n'importe quelle vitesse,
où un écran (4) est affecté à cet unique élément de commande (3), et
où il est possible d'afficher sur l'écran (4), d'une façon alphanumérique ou par des symboles adéquats, la position de sélection réglée momentanément ou, respectivement, la vitesse réglée momentanément,
**caractérisé par le fait**
**que** l'unique élément de commande (3) et l'écran (4) sont reliés à un dispositif électronique de commutation, qui est raccordé à un bus de données installé dans le véhicule et qui délivre, par l'intermédiaire du bus de données, des instructions de commande déclenchées par l'élément de commande (3) à la boîte de vitesses, et
**que** l'unique élément de commande (3) est une touche à poussoir, une touche à paillasson de commutation ou un commutateur à bascule.

2. Sélecteur de vitesse selon la revendication 1
**caractérisé par le fait**
**que** l'écran (4) est exécuté en technologie à cristaux liquides (ou technologie à LCD).

3. Sélecteur de vitesse selon l'une des revendications précédentes
**caractérisé par le fait**
**que** l'unique élément de commande (3) et l'écran (4) sont disposés dans la même unité constructive dans le cache (2) d'un seul boîtier (1).

4. Sélecteur de vitesse selon l'une des revendications précédentes
**caractérisé par le fait**
**que** la correspondance entre la manoeuvre de l'unique élément de commande (3) et le choix d'une position de sélection ou, respectivement, le réglage d'une vitesse sur la boîte de vitesses automatique, ainsi que le genre de l'affichage (a, b, c, d, e, f) sur l'écran (4) de la position de sélection choisie momentanément ou, respectivement, de la vitesse réglée momentanément, sont stockés par programme dans une mémoire qui fait partie intégrante du circuit avec lequel sont reliés l'élément de commande (3) et l'écran (4).

5. Sélecteur de vitesse selon l'une des revendications précédentes
**caractérisé par le fait**
**qu'**il est prévu, en tant que source de lumière pour l'éclairage de l'écran (4) ou de l'élément de commande (3), une ou plusieurs diodes électroluminescentes, le cas échéant, de couleurs différentes.

6. Sélecteur de vitesse selon la revendication 5
**caractérisé par le fait**
**que**, pour la répartition de la lumière produite par la diode électroluminescente ou les diodes électroluminescentes, il est prévu un guide d'ondes optiques.
